# EUROPÄISCHE PATENTSCHRIFT

(11) **EP 2 925 544 B1**
(45) Veröffentlichungstag und Bekanntmachung des Hinweises auf die Patenterteilung: **06.07.2016**
(21) Anmeldenummer: 13776956.8
(22) Anmeldetag: 02.10.2013
(51) Int. Cl.: B60C 23/00, B29C 73/16, B29L 30/00

(54) **VERFAHREN UND VORRICHTUNG ZUR REIFENDRUCKREGELUNG UND ZUR SELBSTTÄTIGEN REPARATUR**
METHOD AND DEVICE FOR TYRE PRESSURE REGULATION AND FOR AUTOMATIC REPAIR
PROCÉDÉ ET DISPOSITIF POUR LA RÉGULATION DE LA PRESSION DES PNEUMATIQUES ET POUR LA RÉPARATION AUTOMATIQUE

(30) Priorität: 30.11.2012 DE 102012023509
(43) Veröffentlichungstag der Anmeldung: 07.10.2015
(73) Patentinhaber: WABCO GmbH, 30453 Hannover (DE)
(72) Erfinder: DIECKMANN, Thomas, 30982 Pattensen (DE); PERTSCHY, Stephan, 64347 Griesheim (DE); ZIELKE, Frank, 30890 Barsinghausen (DE)
(74) Vertreter: Lauerwald, Jörg
(86) Internationale Anmeldenummer: PCT/EP2013/002961
(87) Internationale Veröffentlichungsnummer: WO 2014/082692

(56) Entgegenhaltungen:
- DE-A1- 3 001 056
- DE-A1-102005 004 955
- US-A- 5 629 874
- US-A1- 2009 294 005

## Beschreibung

Die Erfindung betrifft ein Verfahren zum Einstellen oder Regulieren eines Reifenfülldrucks in mindestens einem Fahrzeugreifen eines Fahrzeuges und eine entsprechende Reifenfülldruck-Einstellvorrichtung.

Die EP 1051302B1 zeigt eine derartige Reifenfülldruck- Einstellvorrichtung und ein entsprechendes Verfahren. Insbesondere bei agrartechnischen Fahrzeugen kann der Reifenfülldruck durch das Fahrzeug selbst überprüft und eingestellt werden. Hierzu sind im Bereich der Radanbindungen bzw. Felgen Drehübertrager vorgesehen, die eine Druckluftübertragung des Reifenfülldrucks für den angeschlossenen Fahrzeugreifen ermöglichen. Somit kann der Reifenfülldruck überprüft und Druckluft nachgefüllt oder abgelassen werden. Die Reifenfülldruck-Einstellvorrichtung weist im Allgemeinen einen Druckluftanschluss für eine Druckluftzufuhr, eine elektronische Reifenfülldruck-Steuereinrichtung und geeignete Ventileinrichtungen auf, wobei Druckluft von einer Druckluftzufuhr über die Ventileinrichtungen an Verbindungsleitungen zu den Drehübertragern verteilt werden. Bei entsprechender pneumatischer Ansteuerung kann zunächst die jeweilige Dichtung des Drehübertragers angelegt werden, so dass sie bei drehendem Fahrzeugreifen abdichtet, so dass nachfolgend in einer Füllphase Druckluft nachgefüllt werden kann, und anschließend in einer Messphase der aktuelle Reifenfülldruck des betreffenden Fahrzeugreifens gemessen werden kann, wozu z. B. ein zentraler Drucksensor vorgesehen ist.

Aus den Dokumenten US5629874A, DE3001056A1, DE102005004955A1 und US 2009/294005A1 sind Reifendruckanlagen bekannt.

Die Dichtung des Drehübertragers wird während der Fahrt stark beansprucht, da der drehende Fahrzeugreifen mit dem fahrzeugfesten Druckluftsystem zu verbinden ist. Diese Beanspruchung der Dichtungen begrenzt im Allgemeinen ihre Einsatzfähigkeit und Lebensdauer.

Der Erfindung liegt die Aufgabe zu Grunde, ein Verfahren zur Einstellung oder Regelung eines Reifenfülldrucks in mindestens einem Fahrzeugreifen schaffen, die einen sicheren Betrieb bei geringem Verschleiß der Dichtungen des mindestens einen Drehübertrages ermöglichen.

Diese Aufgabe wird durch ein Verfahren nach Anspruch 1 gelöst. Die Unteransprüche beschreiben bevorzugte Weiterbildungen.

Somit werden die Mess- und Füllzyklen nicht mehr vorab statisch festgelegt, zum Beispiel nach vorgegebenen Zeiten, sondern in Abhängigkeit von aktuellen Fahrzeuggrößen. Die aktuellen Fahrzeuggrößen können insbesondere Fahrdynamikgrößen des Fahrzeugs sein oder umfassen, hierbei vorzugsweise die Fahrgeschwindigkeit bzw. die Raddrehzahlen, insbesondere die Raddrehzahl des betreffenden Fahrzeugreifens.

Weiterhin können die aktuellen Fahrzeuggrößen auch Temperaturwerte umfassen, insbesondere eine Bremsentemperatur der Radbremse, die an dem betreffenden Rad des Fahrzeugreifens vorgesehen ist, weiterhin auch eine Außentemperatur, um Kühlvorgänge ermitteln zu können.

Der Erfindung liegt die Überlegung zu Grunde, dass die Belastung der Dichtungen der Drehübertrager aus grundsätzlich verfügbaren oder ermittelbaren aktuellen Fahrzeug-Größen zumindest abgeschätzt werden kann. Diese Belastung wird insbesondere bestimmt durch
- die Bremsentemperatur, da die Radbremse sich in unmittelbarer Nähe zu dem Drehübertrager befindet und zu erheblichen Temperaturerhöhungen führt. Die Radbremsen sind - wie auch die Drehübertrager - im Bereich der Radfelgen bzw. Radanbindungen vorgesehen, sodass ein erheblicher Energiezufluss von der Radbremse zu dem Drehübertrager erfolgt. Hierbei wird erkannt, dass das Dichtmaterial der eingelegten Dichtung des Drehübertragers bei hoher Temperaturbelastung stärker beschädigt wird,
- die Reibleistung des Drehübertragers, die zum einen zu einer Temperaturbelastung und zum anderen zu einem Verschleiß führt,
- die Fahrgeschwindigkeit und Raddrehzahlen, wobei die Raddrehzahl des betreffenden Fahrzeugreifens für die Ermittlung der Reibleistung des Drehübertragers sowie auch für die Bremsentemperatur des Rades herangezogen werden kann; die Fahrgeschwindigkeit ist insbesondere auch für Kühlvorgänge relevant.
- die Außentemperatur, insbesondere für Kühlvorgänge, sowie die Zeit für die Ermittlung von Zeitdauern, weiterhin auch Datum sowie Daten über die vorausliegende Fahrstrecke.

Erfindungsgemäß wird erkannt, dass insbesondere die Temperatur der Dichtungen relevant ist; hohe Temperaturen der Dichtungen führen zu einem Ausfall bzw. einer Beschädigung des Dichtmaterials. Die temperaturbedingte Beanspruchung kann aus einem Modell unter Heranziehung der Energiezufuhr durch Wärmetransport von der Radbremse sowie die Reibleistung der Dichtungen und Kühlvorgängen durch insbesondere den Fahrtwind in Abhängigkeit der Fahrgeschwindigkeit berechnet oder abgeschätzt werden. Hierbei wird insbesondere auch erkannt, dass sowohl die Mess- und Füllzyklen als auch die zwischen ihnen liegenden Zwischenzeiträume berücksichtigt werden können.

Somit können in einem Modell zur Bewertung der aktuellen Temperatur der Dichtungen der Drehübertrager Wärmezufuhrvorgänge durch die Mess-und Füllzyklen selbst, dass heißt die Reibarbeit der Dichtungen, und weiterhin eine Wärmezufuhr durch die jeweilige Radbremse berücksichtigt werden, sowie Abkühlvorgänge durch zum Beispiel Wärmeleitung im Radfelgenbereich, die zum Beispiel modellmäßig grob abgeschätzt werden kann oder auch aus Vorab-Messungen oder Kalibrierungen abgeschätzt werden kann, und insbesondere Abkühlvorgänge durch den Fahrtwind.

Die Bremsentemperatur kann durch einen gegebenenfalls vorhandenen Bremsentemperatur-Sensor gemessen werden. Alternativ hierzu ist die Ermittlung der Bremsentemperatur aus einem Modell unter Heranziehung der Bremszeiten, Bremsleistungen (in Abhängigkeit der Fahrgeschwindigkeit bzw. Reduzierung der kinetischen Energie des Fahrzeugs durch die Bremsung) unter Berücksichtigung von Abkühlvorgängen möglich.

Die relevanten Fahrzeugdaten können insbesondere über einen fahrzeuginternen Datenbus, insbesondere den CAN-Bus, zur Verfügung gestellt werden. die erfindungsgemäße Reifenfülldruck-Einstellvorrichtung weist somit vorzugsweise eine Reifenfülldruck-Steuereinrichtung mit einer Schnittstelle für den fahrzeuginternen Datenbus auf. Hierdurch können neben Fahrdynamik-Größen wie Fahrgeschwindigkeit und Raddrehzahlen insbesondere auch Daten über Zeit, Datum und Außentemperatur empfangen werden. Die Bremsentemperatur kann gegebenenfalls von einem ABS-Steuergerät empfangen werden, wenn dieses diesen Wert ermittelt.

Durch Auswertung der gemessenen oder durch eine Simulationsrechnung abgeschätzten Bremsentemperatur können somit Mess- und Füllzyklen bei heißen Dichtungen ganz unterdrückt werden, um die Dichtung zu schützen; hierzu kann eine maximale Brems-Temperatur für die Bremsentemperatur festgelegt werden, oberhalb der keine Mess- und Füllzyklen eingeleitet werden. Alternativ kann vorgesehen sein, dass bei Überschreiten der maximalen Bremsentemperatur größere Zwischenzeiträume und in den Mess-und Füllzyklen kürze Messphasen festgelegt werden.

Somit kann bei Fahrtantritt bei kalten Fahrzeugreifen zum Beispiel zunächst der Druck eingestellt werden, zum Beispiel auf 0,1 bar genau (abhängig von der Außentemperatur), woraufhin nach Fahrtantritt sich der Reifenfülldruck erhöht, was zunächst toleriert werden kann bis zu einer maximalen Grenze von zum Beispiel + 15 %. Nachfolgend wird jeweils aktuell bestimmt, wann Mess- und Füllzyklen einzuleiten sind. Durch eine Simulationsrechnung kann dann die Temperatur der Dichtungen abgeschätzt werden, und in Abhängigkeit hiervon das Anlegen der Dichtungen gesteuert werden. Weiterhin können zusätzliche Geschwindigkeitsbereiche festgelegt werden.

Gemäß einer weiteren Ausbildungsform kann auch der Verschleiß der Dichtung abgeschätzt werden. Hierzu können Betätigungszyklen gezählt werden oder der Verschleiß simuliert werden unter Berücksichtigung des Anlegedrucks und der Raddrehzahl, da bei höherem Anlegedruck im Drehübertrager der Verschleiß höher ist, und auch bei steigender Raddrehzahl der Verschleiß der Dichtung größer ist. Hierdurch kann eine gewisse Mindestlebensdauer der Dichtungen angestrebt werden.

Weiterhin kann berücksichtigt werden, dass ein Fahrzeugreifen nach Absenken seines Drucks, zum Beispiel bei einer Leckage, selbsttätig durch ein Dichtmittel wieder repariert werden kann. In diesen Fall kann das System in einen Notfall-Füllmodus geschaltet werden, in dem Dichtungen für einen längeren Zeitraum angelegt werden; hierbei können zum Beispiel in den Mess- und Füllzyklen relativ kurze Messphasen durchgeführt werden, um möglichst lange Füllphasen zur Verfügung zu haben. Vorteilhafterweise wird der Notfall-Füllmodus nur im Stillstand, d.h. bei Fahrgeschwindigkeit v = 0, aktiviert.

Gemäß einer weiteren Ausführungsform kann vorgesehen sein, in den Zwischenzeiträumen zwischen den Mess- und Füllzyklen zusätzlich oder alternativ zu der internen Simulation in der Reifenfülldruck-Steuereinrichtung eine Überwachung durch die Brems- Steuereinrichtung, zum Beispiel eine ABS-Steuereinrichtung oder EBS- Steuereinrichtung durchzuführen. Die Brems-Steuereinrichtung kann hierbei aus dem Vergleich der Raddrehzahlen der Fahrzeugreifen auf eine Reifenfülldruck-Verringerung schließen; solche tire-pressure-monitoring-Systeme unter Heranziehung der Raddrehzahlen sind als solche bekannt. Sie können somit insbesondere in den Zwischenzeiträumen durchgeführt werden, wobei bei Erkennen eines Reifenfülldruck-Abfalls nachfolgend die Reifenfülldruck-Steuereinrichtung des Reifenfülldruck- Systems aktiviert werden kann, zur Einleitung eines Mess- und Füllzyklus.

Alternativ oder auch zusätzlich kann auch direkt eine Einstellung der Mess- und Füllzyklen sowie der Zwischenzeiträume in Abhängigkeit der Bremsentemperatur statt der ermittelten Dichtungstemperatur erfolgen.

Weiterhin kann auch eine Regelung oder Einstellung dahingehend erfolgen, dass eine Minimierung des drehgeschwindigkeitsabhängigen Verschleißes der Dichtungen angestrebt wird. Hierbei kann ein Verschleiß der einzelnen Dichtungen als Funktion der Raddrehzahl angesetzt werden; somit werden Mess- und Füllzyklen insbesondere in Zeiten mit geringen Raddrehzahlen und somit geringer Fahrgeschwindigkeit durchgeführt.

Die Erfindung wird im Folgenden anhand der beiliegenden Zeichnungen an einigen Ausführungsformen erläutert. Es zeigen:

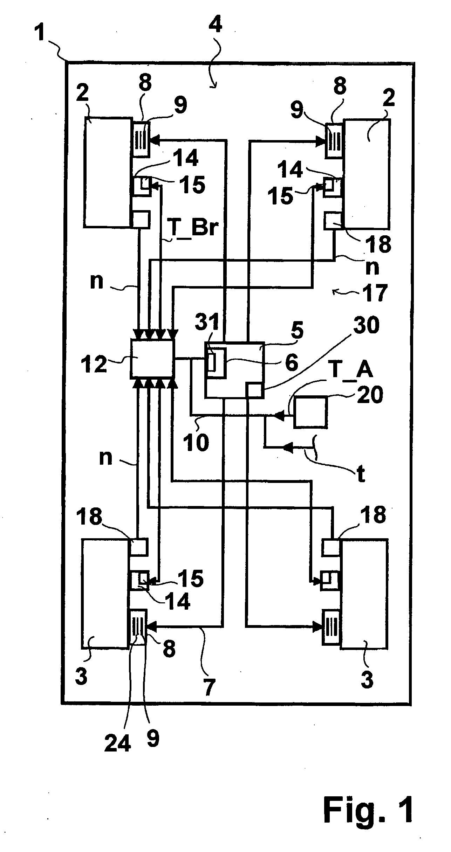

- Fig. 1: ein Schaltbild eines Fahrzeuges mit einem ReifenfülldruckEinstellsystem gemäß einer Ausführungsform der Erfindung;
- Fig. 2: ein elektropneumatisches Schaltbild eines ReifenfülldruckEinstellsystems bei einem Fahrzeug mit Zwillingshinterreifen;
- Fig. 3: ein Zeitdiagramm zur Darstellung der Abfolge von Mess-und Füllzyklen.

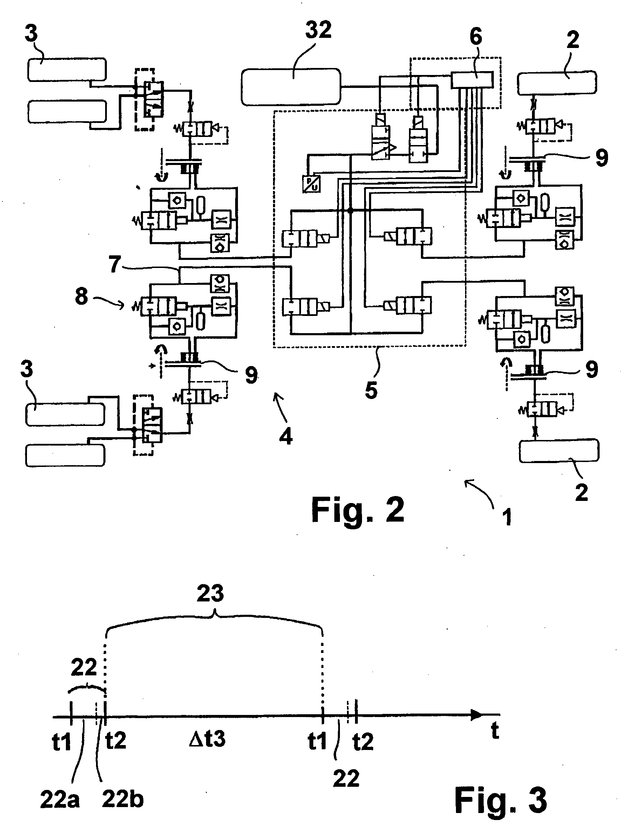

Ein Fahrzeug 1, insbesondere Nutzfahrzeug, weist Fahrzeugreifen 2, 3, nämlich zwei Vorderreifen 2 und zwei Hinterreifen 3 auf; gemäß der Ausführungsform der Fig. 2 können die Hinterreifen zum Beispiel auch ZwillingsHinterreifen sein.

Das Fahrzeug 1 weist eine Reifenfülldruck-Einstellvorrichtung 4 zur Einstellung des Reifenfülldrucks p in den Fahrzeugreifen 2, 3 auf. Die Reifenfülldruck-Einstellvorrichtung 4 weist im Allgemeinen eine zentrale Reifenfülldruck- Modulationseinrichtung (TPC-Modulationseinrichtung) 5 mit einer Reifenfülldruck- Steuereinrichtung 6 (TPC-Steuereinrichtung) 6. pneumatische Verbindungsleitungen 7 und dezentrale Pneumatik-Einrichtungen 8 an den Fahrzeugreifen 2, 3 auf, die über die pneumatischen Verbindungsleitungen 7 mit der zentralen Reifenfülldruck- Modulationseinrichtung 5 verbunden sind. Die Reifenfülldruck- Modulationseinrichtung 5 ist im Allgemeinen an eine beispielhaft in Fig. 2 gezeigte Druckluftzufuhr 32 angeschlossen.

Die Pneumatik-Einrichtungen 8 weisen Drehübertrager 9 auf, die eine Reifenbefüllung durch die Reifenfülldruck- Modulationseinrichtung 5 auch während der Fahrt ermöglichen. Hierzu wird eine Dichtung 24 des betreffenden Drehübertragers pneumatisch angelegt, die somit einen Reibkontakt zu dem jeweiligen Fahrzeugreifen 2 oder 3 bzw. dem Rad herstellt. Bei zweikanaliger Ausbildung der Verbindungsleitungen 7 können direkt die Drehübertrager 9 angesteuert werden, dass heißt, die Pneumatik-Einrichtungen 8 werden ganz oder im Wesentlichen durch die Drehübertrager 9 ausgebildet. Bei einer einkanaligen Ansteuerung weisen die Pneumatik-Einrichtungen 8 im Allgemeinen zusätzliche pneumatische Schaltungen zur Ansteuerung der Drehübertrager 9 auf. Die Verbindungsleitungen 7 ermöglichen hierbei eine bidirektionale Druckluftleitung, um den Reifenfülldruck p in den Fahrzeugreifen 2, 3 durch einen in der Reifenfülldruck- Modulationseinrichtung 5 vorgesehenen Drucksensor 30 zu messen.

Die Drehübertrager 9 werden hierbei pneumatisch über die jeweilige Verbindungsleitung 7 angesteuert, so dass zu einem Anfangszeitpunkt t1 die jeweilige Dichtung 24 angelegt werden und somit eine Druckluftverbindung zwischen dem Fahrzeugreifen 2 oder 3 und der betreffenden pneumatischen Verbindungsleitung 7 und somit der Reifenfülldruck- Modulationseinrichtung 5 geschaffen wird, wodurch ein Mess- und Füllzyklus 22 gestartet wird, der z. B. zunächst eine Füllphase 22a und nachfolgend eine Messphase 22b umfasst, woraufhin zu einem Endzeitpunkt t2 die Dichtung 24 wieder geöffnet wird.

Die Reifenfülldruck-Steuereinrichtung 6 weist eine Schnittstelle 31 an einen fahrzeuginternen CAN-Bus 10 auf, über den sie mit weiteren Steuereinrichtungen des Fahrzeuges 1 verbunden ist, insbesondere einer Brems-Steuereinrichtung 12, die zum Beispiel eine ABS- und/oder EBS- Steuereinrichtung sein kann und vorteilhafterweise ein elektropneumatisches Bremssystem 17 steuert. Das Bremssystem 17 weist Radbremsen 14 auf, die gegebenenfalls Bremsentemperatur-Sensoren 15 aufweisen, die Messsignale der Bremsentemperatur T_Br an die Brems- Steuereinrichtung 12 ausgeben. Über z. B. den CAN-Bus 10 werden die Messsignale der Bremsentemperatur T_Br der einzelnen Radbremsen 14 an die Reifenfülldruck- Steuereinrichtung 6 weiter gegeben.

Das Bremssystem 17 weist an den einzelnen Rädern der Vorder- und Hinterreifen 2, 3 Drehzahlsensoren (ABS-Sensoren) 18 auf, die entsprechende Raddrehzahlsignale n an die Brems-Steuereinrichtung 12 ausgeben. Auch die Raddrehzahlsignale n der einzelnen Vorder- und Hinterreifen 2, 3 werden entsprechend über den CAN-Bus 10 an die Reifenfülldruck- Steuereinrichtung 6 übertragen. Weiterhin nimmt die Reifenfülldruck- Steuereinrichtung 6 über den CAN-Bus 10 Signale der Außentemperatur T_A, die zum Beispiel Messwerte eines Außentemperatursensors 20 des Fahrzeuges 1 einzeln messen können, und ein Fahrgeschwindigkeitssignal v auf. Die Reifenfülldruck-Steuereinrichtung 6 weist weiterhin eine interne Uhr auf oder nimmt über den CAN-Bus 10 die entsprechenden Zeit-Signale t mit Angaben über Zeit und Datum auf.

Die Reifenfülldruck-Steuereinrichtung 6 ermittelt aus diesen Signalen bzw. Messwerten, dass heißt insbesondere den Raddrehzahlen n, den Zeitsignalen t, den Signalen der Außentemperatur T_A, der Fahrgeschwindigkeit v und vorteilhafterweise - falls vorhanden - der Messignale der Bremsentemperatur T_Br der einzelnen Fahrzeugreifen, d.h. der Vorderreifen 2 und Hinterreifen 3, somit die Anfangszeitpunkte t1 zum Einleiten der Mess- und Füllzyklen 22 und die Endzeitpunkte t2 zur Beendigung der Mess- und Füllzyklen 22. Fig. 3 zeigt den zeitlichen Ablauf als Zeitpfeil. Der zeitliche Abstand Δt3 zwischen den Mess- und Füllzyklen und die Zeitlänge t2 - t1 der Mess- und Füllzyklen 22 wird von der Reifenfülldruck-Steuereinrichtung 6 ermittelt.

Hierbei führt die Reifenfülldruck-Steuereinrichtung 6 bzw. eine mit ihr verbundene Simulations- oder Recheneinrichtung eine Simulationsrechnung zum Abschätzen der Bremsentemperatur T_Br der einzelnen Radbremsen 14 durch. Ziel ist es hierbei, Mess- und Füllzyklen 22 bei heißen Radbremsen 14 ganz oder weitgehend zu unterdrücken. Somit kann zum Beispiel die ermittelte Bremsentemperatur T_Br mit einem (oberen) Bremsentemperatur-Grenzwert Tg verglichen werden, so dass bei T_Br > Tg kein Mess- und Füllzyklus 22 eingeleitet wird, um die Dichtungen 24 der Drehübertrager 9 zu schützen, oder die Anzahl bzw. Frequenz der Mess- und Füllzyklen 22 verringert wird. Weiterhin kann die Messphase 22b verringert werden.

Bei Fahrtbeginn können durch die ermittelte Außentemperatur T_A, ergänzend zum Beispiel auch durch das Zeitsignal t zum einen die Bremsentemperatur T_Br und auch das Abkühlen der Radbremsen 14 nach Betätigung abgeschätzt werden. Somit kann der Zustand der Fahrzeugreifen bei Fahrtantritt, das heißt die Kaltreifen-Temperatur, ermittelt bzw. abgeschätzt werden. Somit können zum Beispiel in einem ersten Mess- und Füllzyklus 22 der Reifenfülldruck p auf 0,1 bar genau eingestellt werden, zum Beispiel auch unabhängig von der Außentemperatur T_A. Nach Fahrtantritt erhöht sich der Reifenfülldruck p, was zum Beispiel bis zu einer maximalen Grenze von px = 1,15, das heißt einer 15-prozentigen Erhöhung, toleriert wird.

Nachfolgend können Mess- und Füllzyklen 22 grundsätzlich zunächst periodisch, zum Beispiel nach Zeit oder auch nach Fahrkilometern, eingestellt werden. Hierbei wird diese Einteilung nach Mess- und Füllzyklen 22 und Zwischenzeiträumen 23 zunächst von der Reifenfülldruck-Steuereinrichtung 6 angestrebt; durch Messung der Bremsentemperatur T_Br wird hiermit ermittelt, ob der Bremsentemperatur-Grenzwert Tg gegebenenfalls überschritten wird, so dass in diesem Fall ein Mess- und Füllzyklus 22 nicht eingeleitet, sondern verschoben wird.

Weiterhin können die Mess- und Füllzyklen 22 bereits von Vornherein, oder auch abhängig von Umgebungsbedingungen, auf bestimmte Geschwindigkeitsbereiche, z. B. v < vg mit vg als Fahrzeug-Grenzgeschwindigkeit, bzw. Raddrehzahl-Grenzwerte festgelegt werden, da bei höheren Raddrehzahlen n die Beanspruchung der Dichtungen entsprechend größer ist. Hierbei kann zum Beispiel vorgesehen sein, dass bei Überschreiten des Bremsentemperatur-Grenzwertes Tg und/oder Überschreiten der Fahrzeug-Grenzgeschwindigkeit vg nach größeren Zeiträumen aus Sicherheitsgründen - trotz der hohen Bremsentemperatur T_Br bzw. hohen Fahrgeschwindigkeit v - jeweils ein Mess- und Füllzyklus 22 eingeleitet wird, wobei diese Zeiträume dann zum Beispiel deutlich größer als der zeitliche Abstand Δt3 der normalen Zwischenzeiträume 23 angesetzt wird.

Bei angelegter Dichtung während der Fahrt, dass heißt v > 0, kommt es zu einer Erwärmung der Dichtungen 24 der Drehübertrager 9 durch die Reibleistung, weiterhin auch zu einem direkten Reib-Verschleiß. Die Temperatur kann durch eine Simulationsrechnung der Reifenfülldruck-Steuereinrichtung 6 abgeschätzt werden, so dass hierdurch die Zeitpunkte zum Anlegen der Dichtungen 24 in den Mess- und Füllzyklen 22 gesteuert werden können.

Weiterhin führen auch Bremsvorgänge zu einer Erhöhung der Temperatur der Dichtungen 24, da die Radbremsen 14 im Radanbindungsbereich bzw. Bereich der Felgen angebracht sind und somit in unmittelbarer Nähe der Drehübertrager 9; es erfolgt eine direkte Wärmeleitung zu den Dichtungen 24.

Hierbei sind weitere Ausbildungen bzw. Ausführungsformen möglich. So können die Mess- und Füllzyklen 22 gezählt werden und zur Simulation des Verschleißes der Dichtungen 24 unter verschiedenen Bedingungen eingesetzt werden. Somit kann die Messzyklusfrequenz, das heißt Anzahl der Mess- und Füllzyklen 22 bzw. Anteil der Zeitlänge t2 - t1 an der Gesamtzeit eingestellt werden, so dass eine bestimmte Mindestlebensdauer der Dichtungen 24 erreicht wird.

Falls ermittelt wird, dass der Reifenfülldruck p in einem Vorderreifen 2 oder Hinterreifen 3 sehr stark abgesunken ist, zum Beispiel nach einer Leckage, die durch ein Dichtmittel wieder repariert werden kann, kann das System in einen Notfall-Füllmodus geschaltet werden. In diesem Notfall- Füllmodus sind die Dichtungen für einen längeren Zeitraum als die Zeitlänge t2 - t1 angelegt um ein Nachfüllen zu erreichen. Entsprechend sind die Messphasen 22b in den Mess- und Füllzyklen 22 entsprechend geringer angesetzt, um in möglichst kurzer Zeit viel Luft nachfüllen zu können. Dieser Modus ist vorteilhafterweise nur im Stillstand, dass heißt bei v = 0, aktivierbar.

Falls die Brems- Steuereinrichtung 12 eine Reifenfülldrucküberwachung durch Auswertung der Raddrehzahlen n aufweist, die die Raddrehzahlen n einer Achse, d.h. der beiden Vorderreifen 2 oder der beiden Hinterreifen 3, vergleicht und einen geringeren Reifenfülldruck p aus - mittelfristig oder langfristig - höheren Raddrehzahlen n erkennt, da der Radius des Rades des jeweiligen Fahrzeugreifens 2 oder 3 geringer ist, so kann eine Schnittstelle zwischen den Funktionen der Brems-Steuereinrichtung 12 und der Reifenfülldruck- Steuereinrichtung 6 vorgesehen sein. Diese kann insbesondere derartig gestaltet sein, dass in den Zwischenzeiträumen 23, in denen nicht gemessen wird, die Brems-Steuereinrichtung 12 die Überwachung der betreffenden Fahrzeugreifen 2, 3 übernimmt und eine Abschätzung des nicht ermittelten Reifenfülldrucks p durch einen Vergleich der Raddrehzahlen n ermöglichen. In kurzzeitigen Mess- und Füllzyklen 22 kann hierbei jeweils nachkalibriert werden, dass heißt ein Abgleich auf die tatsächlichen Messwerte erfolgen.

Es kann zum Beispiel eine Fahrzeug-Grenzgeschwindigkeit vg von 60 km/h für normalen Fahrbetrieb festgesetzt werden, so dass lediglich bei Fahrgeschwindigkeiten v < vg = 60 km/h Mess- und Füllzyklen 22 durchgeführt werden. Falls jedoch über einen längeren Zeitraum v > vg vorliegt, kann zum Beispiel auch eine gewisse Anzahl von Mess- und Füllzyklen bis zum Beispiel einer oberen Fahrzeug-Grenzgeschwindigkeit vg2 = 90 km/h erlaubt werden, wenn die gemessene oder ermittelte Bremsentemperatur T_Br und Außentemperatur T_A eine definierte Schwelle nicht überschreiten. Wenn hingegen ein hinreichend häufig wechselndes Geschwindigkeitsniveau erkannt wird, so werden Füll- und Messzyklen 22 nur unterhalb von Vg = 60 km/h durchgeführt.

Weiterhin können die Füll- und Messzyklen 22 gezählt werden, insbesondere nach Anzahl oder auch Gesamt-Zeitdauer, um zur Simulation des Verschleißes der Dichtung unter verschiedenen Bedingungen heranzuziehen. Natürlich kann zum Beispiel vorausschauend die Messzyklusfrequenz gesteuert werden, so dass eine bestimmte Mindestlebensdauer der Dichtungen 24 erreicht wird. Zum Beispiel können auf Basis einer in Prüfstandversuchen gemessene Lebensdauer und der angestrebten Gesamtfahrstrecke des Fahrzeugs eine maximale Dichtungsanlegedauer pro 1000 km vorgegeben werden. Je nach Fahrprofil und Umgebungsbedingungen kann somit über die Laufleistung eine variierende Zyklusfrequenz erreicht werden.

Weiterhin kann ein Notfall-Füllmodus vorgesehen sein, bei dem bei Erkennen einer Leckage, die durch ein Dichtmittel selbsttätig wieder repariert werden kann, dass System in einen "Notfall-Füllmodus" geschaltet wird. In diesem Notfall-Füllmodus werden die Dichtungen über einen längeren Zeitraum angelegt, wobei dieser Modus vorteilhafterweise nur im Stillstand bei v = 0 einstellbar ist. Insbesondere in einem derartigen Notfallmodus kann vorgesehen sein, wie bereits oben beschrieben nur wenige Messphasen 22b in den Mess- und Füllzyklen 22 durchzuführen, um möglichst viel Zeit zum Luftnachfüllen einsetzen zu können..

### Bezugszeichenliste (Bestandteil der Beschreibung)

- 1: Fahrzeug
- 2: Vorderreifen
- 3: Hinterreifen
- 4: Reifenfülldruck-Einstellvorrichtung
- 5: zentrale Reifenfülldruck- Modulationseinrichtung
- 6: Reifenfülldruck-Steuereinrichtung
- 7: pneumatische Verbindungsleitungen
- 8: Pneumatik-Einrichtungen
- 9: Drehübertrager
- 10: CAN-Bus
- 12: Brems-Steuereinrichtung
- 14: Radbremsen
- 15: Bremsentemperatur-Sensoren
- 17: elektropneumatisches Bremssystem
- 18: Drehzahlsensoren (ABS-Sensoren)
- 20: Außentemperatursensor
- 22: Mess- und Füllzyklus
- 22a: Füllphase
- 22b: Messphase
- 23: Zwischenzeiträume
- 24: Dichtung
- 30: Drucksensor
- 31: Schnittstelle
- 32: Druckluftzufuhr
- t: Zeitsignale
- t1: Anfangszeitpunkt
- t2: Endzeitpunkt
- Δt3: zeitlicher Abstand
- T_A: Außentemperatur
- T_Br: Bremsentemperatur
- Tg: Bremsentemperatur-Grenzwert
- v: Fahrgeschwindigkeit
- vg: Fahrzeug-Grenzgeschwindigkeit
- n: Raddrehzahlsignale
- p: Reifenfülldruck
- px: maximale Grenze des Reifenfülldrucks

## Patentansprüche

1. Verfahren zum Einstellen oder Regulieren eines Reifenfülldrucks (p) in mindestens einem Fahrzeugreifen (2, 3) eines Fahrzeuges (1), bei dem
- in Mess- und Füllzyklen (22) der Reifenfülldruck (p) mindestens eines Fahrzeugreifens (2, 3) durch Messen und Füllen reguliert wird, indem jeweils in mindestens einem Drehübertrager (9) eine Dichtung (24) angelegt wird und bei angelegter Dichtung (24) ein Reifenfülldruck (p) geändert und/oder gemessen wird und nachfolgend die Dichtung (24) wieder abgekoppelt wird, wobei die Mess- und Füllzyklen (22) auch während der Fahrt des Fahrzeuges (1) einleitbar sind, und
- in Zwischenzeiträumen (23) zwischen den Mess- oder Füllzyklen (22) die Dichtung (24) nicht angelegt ist,
**dadurch gekennzeichnet, dass**
die Mess- und Füllzyklen (22) und die Zwischenzeiträume (23) in Abhängigkeit von ermittelten aktuellen Fahrzeug-Größen (v, n, T_Br) des Fahrzeuges (1) eingestellt werden.

2. Verfahren nach Anspruch 1, **dadurch gekennzeichnet, dass** die ermittelten aktuellen Fahrzeug -Größen aktuelle Fahrdynamik-Größen, insbesondere eine ermittelte Fahrgeschwindigkeit (v) und/oder ermittelte Raddrehzahlen (n) des Fahrzeuges (1) umfassen.

3. Verfahren nach Anspruch 2, **dadurch gekennzeichnet, dass** bei steigender Fahrgeschwindigkeit (v) und/oder steigenden Raddrehzahlen (n) weniger und/oder kürzere Mess- und Füllzyklen (22) festgelegt werden.

4. Verfahren nach Anspruch 3 **dadurch gekennzeichnet, dass** oberhalb einer Fahrzeug-Grenzgeschwindigkeit (vg) keine Mess- und Füllzyklen (22) und/oder Mess- und Füllzyklen (22) mit kürzerer Zeitdauer als unterhalb der Fahrzeug-Grenzgeschwindigkeit (vg) und/oder eine geringere Häufigkeit von Mess- und Füllzyklen (22) und/oder längere Zwischenzeiträume (23) zwischen den Mess- und Füllzyklen (22) festgelegt werden.

5. Verfahren nach Anspruch 4, **dadurch gekennzeichnet, dass** ein Fahrverhalten eines zurückliegenden Zeitraumes bewertet wird, und bei Erkennen eines häufig variierenden Geschwindigkeitsniveaus eine geringere Fahrzeug-Grenzgeschwindigkeit (vg) festgelegt wird als bei Erkennen eines gleichmäßigeren Geschwindigkeitsniveaus.

6. Verfahren nach einem der vorherigen Ansprüche, **dadurch gekennzeichnet, dass** die ermittelten aktuellen Fahrzeug -Größen mindestens eine aktuelle Bremsentemperatur (T_Br) einer Radbremse (14) eines Fahrzeugreifens (2, 3) umfassen.

7. Verfahren nach Anspruch 6, **dadurch gekennzeichnet, dass** weniger oder kürzere Mess- und Füllzyklen (22) des betreffenden Fahrzeugreifens (2, 3) festgelegt werden.

8. Verfahren nach Anspruch 6 oder 7, **dadurch gekennzeichnet, dass** die aktuelle Bremsentemperatur (T_Br) ermittelt wird aus:
einer Messung und/oder aus einem Modell unter Heranziehung einer ermittelten Reibleistung der Radbremse (14), einer Außentemperatur (T_A) des Fahrzeuges (1) und einer Kühlleistung in Abhängigkeit der Fahrgeschwindigkeit (v).

9. Verfahren nach einem der Ansprüche 6 bis 8, **dadurch gekennzeichnet, dass** mit steigender Bremsentemperatur (T_Br) keine Mess- und Füllzyklen (22) und/oder weniger Mess- und Füllzyklen (22) und/oder Mess- und Füllzyklen (22) mit kürzerer Zeitdauer und/oder eine geringere Häufigkeit von Mess- und Füllzyklen (22) und/oder längere Zwischenzeiträume (23) zwischen den Mess- und Füllzyklen (22) festgelegt werden.

10. Verfahren nach Anspruch 9, **dadurch gekennzeichnet, dass** die Reibleistung ermittelt wird aus vorherigen Mess- und Füllzyklen (22) unter Heranziehung der Fahrgeschwindigkeiten (v) und/oder Raddrehzahlen (n) während der vorherigen Mess- und Füllzyklen (22).

11. Verfahren nach einem der vorherigen Ansprüche, **dadurch gekennzeichnet, dass** eine Reibleistung der Dichtung des betreffenden Drehübertragers (9) während der Mess- und Füllzyklen (22) ermittelt wird aus einem Modell unter Heranziehung der Drehzahl des Fahrzeugreifens (2, 3) und der Zeitdauern der Mess- und Füllzyklen (22) und Zwischenzeiträume (23).

12. Verfahren nach einem der vorherigen Ansprüche, **dadurch gekennzeichnet, dass** ein Fahrprofil einer zurückgelegten Fahrstrecke oder einer aufgrund von Kartendaten und/oder Navigationsdaten ermittelten vorausgegebenen Fahrstrecke herangezogen wird und die Mess- und Füllzyklen (22) in Zeiten mit geringer Fahrgeschwindigkeit (v) und/oder geringerer Bremsleistung gelegt werden.

13. Verfahren nach einem der vorherigen Ansprüche, **dadurch gekennzeichnet, dass** bei Feststellen einer Verringerung des Reifenfülldrucks (p) in einem Fahrzeugreifen (2, 3) um einen Grenzwert auf eine Leckage erkannt wird und eine selbsttätige Reparatur eingeleitet wird, indem über den Drehübertrager (9) ein Dichtmittel zugeführt wird, wobei vorzugsweise im Stillstand des Fahrzeugs (1) ein Notfall- Füllmodus eingestellt wird, in dem längere Mess- und Füllzyklen (22) mit kürzeren Messphasen (22b) als außerhalb des Notfall-Füllmodus durchgeführt werden.

14. Verfahren nach einem der vorherigen Ansprüche, **dadurch gekennzeichnet, dass** in den Zwischenzeiträumen (23) eine Überwachung des Reifenfülldrucks (p) durch eine Brems- Steuereinrichtung (12) durchgeführt wird, die Raddrehzahlsignale (n) mehrerer Fahrzeugreifen (2, 3) vergleicht und aus dem Vergleich ermittelt, ob eine Reifenfülldruck- Verringerung des Reifenfülldrucks (p) bei einem oder mehreren Fahrzeugreifen (2, 3) vorliegt, wobei bei Erkennen einer Reifenfülldruck- Verringerung die Reifenfülldruck-Steuereinrichtung (6) aktiviert wird.

15. Verfahren nach einem der vorherigen Ansprüche, **dadurch gekennzeichnet, dass** auf einen durch die Bremsentemperatur (T_Br) bedingter Verschleiß der Dichtungen (24) und/oder auf eine Minimierung des drehgeschwindigkeitsabhängigen Verschleißes der Dichtungen (24) geregelt wird.

## Claims

1. Method for setting or regulating tire inflation pressure (p) in at least one vehicle tire (2, 3) of a vehicle (1), in which
- the tire inflation pressure (p) in at least one vehicle tire (2, 3) is regulated in measuring and inflating cycles (22) by measuring and inflating, in that in each case a seal (24) is applied in at least one rotary signal transmitter (9), and when the seal (24) is applied a tire inflation pressure (p) is changed and/or measured, and subsequently the seal (24) is decoupled again, wherein the measuring and inflating cycles (22) can be initiated even during travel of the vehicle (1), and
- in intermediate time periods (23) between the measuring or inflating cycles (22) the seal (24) is not applied,
**characterized in that**
the measuring and inflating cycles (22) and the intermediate time periods (23) are set as a function of determined current vehicle variables (v, n, T_Br) of the vehicle (1).

2. Method according to Claim 1, **characterized in that** the determined current vehicle variables comprise current driving dynamics variables, in particular a determined speed (v) and/or determined wheel rotational speeds (n) of the vehicle (1).

3. Method according to Claim 2, **characterized in that** fewer and/or shorter measuring and inflating cycles (22) are defined in the case of an increasing speed (v) and/or increasing wheel rotational speeds (n).

4. Method according to Claim 3, **characterized in that** above a vehicle limiting speed (vg) no measuring and inflating cycles (22) and/or measuring and inflating cycles (22) with a shorter duration than below the vehicle limiting speed (vg) and/or a lower frequency of measuring and inflating cycles (22) and/or longer intermediate time periods (23) between the measuring and inflating cycles (22) are defined.

5. Method according to Claim 4, **characterized in that** the driving behavior of a preceding time period is evaluated, and when a frequently varying speed level is detected, a lower vehicle limiting speed (vg) is defined than when a relatively uniform speed level is detected.

6. Method according to one of the preceding claims, **characterized in that** the determined current vehicle variables comprise at least one current brake temperature (T_Br) of a wheel brake (14) of a vehicle tire (2, 3).

7. Method according to Claim 6, **characterized in that** fewer or shorter measuring and inflating cycles (22) of the respective vehicle tire (2, 3) are defined.

8. Method according to Claim 6 or 7, **characterized in that** the current brake temperature (T_Br) is determined from:
a measurement and/or a model using a determined frictional power of the wheel brake (14), an external temperature (T_A) of the vehicle (1) and
a cooling power as a function of the speed (v).

9. Method according to one of Claims 6 to 8, **characterized in that** as the brake temperature (T_Br) rises, no measuring and inflating cycles (22) and/or fewer measuring and inflating cycles (22) and/or measuring and inflating cycles (22) with a shorter duration and/or a lower frequency of measuring and inflating cycles (22) and/or longer intermediate time periods (23) between the measuring and inflating cycles (22) are defined.

10. Method according to Claim 9, **characterized in that** the frictional power is determined from previous measuring and inflating cycles (22) using the speeds (v) and/or wheel rotational speeds (n) during the previous measuring and inflating cycles (22).

11. Method according to one of the preceding claims, **characterized in that** a frictional power of the seal of the respective rotary signal transmitter (9) is determined during the measuring and inflating cycles (22) and from a model using the rotational speed of the vehicle tire (2, 3) and the duration of the measuring and inflating cycles (22) and intermediate time periods (23).

12. Method according to one of the preceding claims, **characterized in that** a driving profile of a distance covered or a previously issued distance determined on the basis of map data and/or navigation data is used, and the measuring and inflating cycles (22) are positioned at times with a relatively low speed (v) and/or relatively low braking power.

13. Method according to one of the preceding claims, **characterized in that** when a reduction in the tire inflation pressure (p) by a limiting value is detected in a vehicle tire (2, 3), a leak is identified and automatic repair is initiated **in that** a sealing means is supplied via the rotary signal transmitter (9), wherein an emergency inflating mode, in which longer measuring and inflating cycles (22) with shorter measuring phases (22b) than outside the emergency inflating mode are carried out, is preferably set in the stationary state of the vehicle (1).

14. Method according to one of the preceding claims, **characterized in that** monitoring of the tire inflation pressure (p) is carried out in the intermediate time periods (23) by means of a brake control device (12), the wheel rotational speed signals (n) of a plurality of vehicle tires (2, 3) being compared, and it being determined from the comparison whether a tire inflation reduction in the tire inflation pressure (p) is present at one or more vehicle tires (2, 3),
wherein when a tire inflation pressure reduction is identified, the tire inflation pressure-control device (6) is activated.

15. Method according to one of the preceding claims, **characterized in that** regulation is carried out with respect to wear of the seals (24) brought about by the brake temperature (T_Br) and/or with respect to minimization of the rotational-speed-dependent wear of the seals (24).

## Revendications

1. Procédé pour régler ou réguler une pression de gonflage de pneu (p) dans au moins un pneu de véhicule (2, 3) d'un véhicule (1), selon lequel
- la pression de gonflage de pneu (p) d'au moins un pneu de véhicule (2, 3) est régulée par mesure et remplissage dans des cycles de mesure et de remplissage (22) en appliquant respectivement une garniture d'étanchéité (24) dans au moins un transmetteur rotatif (9) et en modifiant et/ou en mesurant une pression de gonflage de pneu (p) lorsque la garniture d'étanchéité (24) est appliquée et en désaccouplant ensuite de nouveau la garniture d'étanchéité (24), les cycles de mesure et de remplissage (22) pouvant également être initiés pendant le déplacement du véhicule (1), et
- la garniture d'étanchéité (24) n'est pas appliquée dans les périodes intermédiaires (23) entre les cycles de mesure et de remplissage (22),
**caractérisé en ce que**
les cycles de mesure et de remplissage (22) et les périodes intermédiaires (23) sont réglés en fonction de grandeurs de véhicule (v, n, T_Br) actuelles déterminées du véhicule (1).

2. Procédé selon la revendication 1, **caractérisé en ce que** les grandeurs de véhicule actuelles déterminées comprennent des grandeurs de dynamique de conduite actuelles, notamment une vitesse de déplacement (v) déterminée et/ou des vitesses de rotation de roue (n) déterminées du véhicule (1).

3. Procédé selon la revendication 2, **caractérisé en ce qu'**en présence d'une vitesse de déplacement (v) croissante et/ou de vitesses de rotation de roue (n) croissantes, des cycles de mesure et de remplissage (22) moins nombreux et/ou plus courts sont définis.

4. Procédé selon la revendication 3, **caractérisé en ce qu'**au-dessus d'une vitesse limite de véhicule (vg), aucun cycle de mesure et de remplissage (22) et/ou cycle de mesure et de remplissage (22) dont la durée est plus courte qu'au-dessous de la vitesse limite de véhicule (vg) n'est défini et/ou une fréquence plus faible de cycles de mesure et de remplissage (22) et/ou des périodes intermédiaires (23) plus longues entre les cycles de mesure et de remplissage (22) sont définies.

5. Procédé selon la revendication 4, **caractérisé en ce qu'**un régime de conduite d'une période passée est évalué et, en cas de reconnaissance d'une variation fréquente du niveau de vitesse, une vitesse limite de véhicule (vg) plus faible est définie qu'en cas de reconnaissance d'un niveau de vitesse régulier.

6. Procédé selon l'une des revendications précédentes, **caractérisé en ce que** les grandeurs de véhicule actuelles déterminées comprennent au moins une température de frein (T_Br) actuelle d'un frein de roue (14) d'un pneu de véhicule (2, 3).

7. Procédé selon la revendication 6, **caractérisé en ce que** des cycles de mesure et de remplissage (22) moins nombreux ou plus courts du pneu de véhicule (2, 3) concerné sont définis.

8. Procédé selon la revendication 6 ou 7, **caractérisé en ce que** la température de frein (T_Br) actuelle est déterminée à partir d'une mesure et/ou d'un modèle en faisant appel à une puissance de friction du frein de roue (14), une température extérieure (T_A) du véhicule (1) et une puissance de refroidissement en fonction de la vitesse de déplacement (v).

9. Procédé selon l'une des revendications 6 à 8, **caractérisé en ce que** lorsque la température de frein (T_Br) augmente, aucun cycle de mesure et de remplissage (22) n'est défini et/ou des cycles de mesure et de remplissage (22) moins nombreux et/ou des cycles de mesure et de remplissage (22) dont la durée est plus courte et/ou une fréquence plus faible de cycles de mesure et de remplissage (22) et/ou des périodes intermédiaires (23) plus longues entre les cycles de mesure et de remplissage (22) sont définis.

10. Procédé selon la revendication 9, **caractérisé en ce que** la puissance de friction est déterminée à partir des cycles de mesure et de remplissage (22) précédents en faisant appel aux vitesses de déplacement (v) et/ou aux vitesses de rotation de roue (n) pendant les cycles de mesure et de remplissage (22) précédents.

11. Procédé selon l'une des revendications précédentes, **caractérisé en ce qu'**une puissance de friction de la garniture d'étanchéité du transmetteur rotatif (9) concerné est déterminée pendant les cycles de mesure et de remplissage (22) à partir d'un modèle en faisant appel à la vitesse de rotation des pneus de véhicule (2, 3) et aux durées des cycles de mesure et de remplissage (22) et aux périodes intermédiaires (23).

12. Procédé selon l'une des revendications précédentes, **caractérisé en ce qu'**un profil de conduite d'un trajet parcouru ou d'un trajet prédéfini, déterminé en se basant sur des données cartographiques et/ou des données de navigation, est utilisé et les cycles de mesure et de remplissage (22) sont appliqués dans les périodes à plus faible vitesse de déplacement (v) et/ou à plus faible puissance de freinage.

13. Procédé selon l'une des revendications précédentes, **caractérisé en ce qu'**en cas de constatation d'une diminution de la pression de gonflage de pneu (p) dans un pneu de véhicule (2, 3) égale à une valeur limite, une fuite est détectée et une autoréparation est initiée **en ce qu'**un agent d'étanchéité est acheminé par le biais du transmetteur rotatif (9), un mode de remplissage de secours survenant de préférence à l'arrêt du véhicule (1), dans lequel sont exécutés des cycles de mesure et de remplissage (22) plus longs avec des phases de mesure (22b) plus courtes qu'en-dehors du mode de remplissage de secours.

14. Procédé selon l'une des revendications précédentes, **caractérisé en ce que** dans les périodes intermédiaires (23), une surveillance de la pression de gonflage de pneu (p) est effectuée par un dispositif de commande de frein (12), les signaux de vitesse de rotation de roue (n) de plusieurs pneus de véhicule (2, 3) sont comparés et la comparaison est utilisée pour déterminer s'il y a présence d'une diminution de la pression de gonflage de pneu (p) sur un ou plusieurs pneus de véhicule (2, 3), le dispositif de commande de pression de remplissage de pneu (6) étant activé en cas de détection d'une diminution de la pression de gonflage de pneu.

15. Procédé selon l'une des revendications précédentes, **caractérisé en ce que** la régulation est effectuée sur une usure des garnitures d'étanchéité (24) causée par la température de frein (T_Br) et/ou sur une diminution de l'usure dépendante de la vitesse de rotation des garnitures d'étanchéité (24).
